# FASCICULE DE BREVET EUROPEEN

(11) **EP 2 922 726 B1**
(45) Date de publication et mention de la délivrance du brevet: **09.01.2019**
(21) Numéro de dépôt: 13808096.5
(22) Date de dépôt: 22.11.2013
(51) Int. Cl.: B60L 11/18, H02J 7/00, B60L 3/12

(54) **SYSTÈME D'ÉQUILIBRAGE D'UNE BATTERIE DE TRACTION D'UN VÉHICULE**
SYSTEM ZUM AUSGLEICH EINER TRAKTIONSBATTERIE EINES FAHRZEUGS
SYSTEM FOR BALANCING A TRACTION BATTERY OF A VEHICLE

(30) Priorité: 23.11.2012 FR 1261176
(43) Date de publication de la demande: 30.09.2015
(73) Titulaire: Renault S.A.S., 92100 Boulogne-Billancourt (FR); Commissariat à l'Énergie Atomique et aux Énergies Alternatives, 75015 Paris (FR)
(72) Inventeur: CORDESSES, Lionel, 78180 Montigny-Le-Bretonneux (FR); LAVIE, Julien, 78084 Guyancourt Cedex (FR); GASCHER, Alain, 92310 Sevres (FR); LUCEA, Marc, 92100 Boulogne-Billancourt (FR); GARNIER, Laurent, 69970 Marennes (FR)
(74) Mandataire: Novagraaf Technologies
(86) Numéro de dépôt international: PCT/FR2013/052825
(87) Numéro de publication internationale: WO 2014/080138

(56) Documents cités:
- WO-A1-2007/145464
- WO-A1-2012/120030
- US-A1- 2002 109 482
- US-A1- 2005 140 336

## Description

La présente invention concerne de manière générale un système d'équilibrage d'une batterie de traction d'un véhicule pour équilibrer le niveau de charge des cellules élémentaires de la batterie.

La technologie de batterie Li-ion (Lithium ion), largement utilisée dans différents secteurs de l'industrie et notamment dans l'automobile, nécessite l'utilisation de systèmes d'équilibrage pour garantir l'utilisation à long terme du pack batterie. Ces systèmes d'équilibrage font généralement partie du système de gestion de la batterie BMS (pour *'Battery Management System',* en anglais).

Ceci est lié au fait que chaque cellule Li-ion (dont l'assemblage en série et en parallèle permet de construire un pack batterie) doit impérativement rester dans une plage de tension restreinte, au risque d'en dégrader de façon irréversible les performances. Or, lorsqu'un grand nombre de cellules sont assemblées au sein d'un pack (typiquement 96 doublets de cellules au sein des packs batteries actuellement en cours de développement pour les véhicules électriques), il est inévitable que celles-ci présentent des caractéristiques différentes, et ce d'autant plus que le pack batterie vieillit : on observe parmi toutes les cellules des variations non identiques de certaines caractéristiques qui impactent directement leur état de charge (courant d'autodécharge, rendement faradique, charge maximale,....).

Dans les phases de charge ou de décharge du pack batterie, comme le courant principal qui parcourt le pack est le même au niveau de chaque cellule (avec les architectures usuelles des packs utilisés dans l'automobile), il n'est pas possible de charger ou décharger individuellement une ou plusieurs cellules sans faire appel à des moyens supplémentaires.

D'autres chimies de cellules électrochimiques (au plomb, par exemple) ne présentent pas les mêmes contraintes en termes de plages de tension utilisables. En charge, des réactions parasites, qui ne dégradent pas les performances de la cellule, permettent de dissiper l'énergie excédentaire une fois que son état de charge maximale est atteint. Inversement, les décharges très profondes (jusqu'à ce que la charge contenue dans la cellule soit quasiment nulle) sont également possibles. Pour ces types de cellules électrochimiques, la façon la plus simple pour équilibrer le pack, c'est-à-dire ramener toutes les cellules individuelles au même état de charge, consiste alors à poursuivre la charge jusqu'à ce que toutes les cellules soient entièrement chargées.

Cette stratégie n'est pas possible avec les cellules Li-ion : dès lors qu'une seule cellule a atteint son seuil haut de tension (typiquement 4.2V), il est impératif d'arrêter la charge au risque de dégrader la cellule. On fait alors appel à des circuits électroniques dédiés, appelés circuits d'équilibrage, qui permettent :
- soit de dissiper l'énergie dans les premières cellules chargées, afin de pouvoir ensuite continuer la charge du pack complet : on parlera alors de système d'équilibrage dissipatif ;
- soit de transférer l'énergie des cellules les plus chargées vers d'autres cellules : on parlera alors de système d'équilibrage non-dissipatif. Certains systèmes d'équilibrage non-dissipatifs permettent également de prélever sélectivement de l'énergie d'une ou plusieurs cellules.

Comparativement aux systèmes dissipatifs, les systèmes d'équilibrage non-dissipatifs présentent plusieurs avantages :
- ces systèmes sont utilisables durant la décharge de la batterie pour optimiser la répartition des charges individuelles de chaque cellule, l'objectif étant idéalement d'arriver à l'état de charge minimal de chaque cellule simultanément. Ceci permet alors une meilleure utilisation de la batterie, dans la mesure où l'ensemble des charges contenues dans les cellules individuelles est exploité : on peut retarder la limite de la première cellule atteignant son seuil minimal d'état de charge ; et
- ces systèmes sont utilisables durant la charge de la batterie pour optimiser la répartition des charges individuelles de chaque cellule afin d'idéalement arriver à l'état de charge maximal de chaque cellule simultanément. Ceci permet d'optimiser le temps de charge de la batterie.

Les systèmes connus d'équilibrage non-dissipatif, appliqués à une batterie composée de plusieurs cellules, se découpent en deux catégories :
(i) Ceux basés sur des interrupteurs de puissance, permettant d'isoler une ou plusieurs cellules du pack batterie. Même si ce système non-dissipatifs produit une chaleur rayonnée plus faible qu'un système dissipatif, les solutions basées sur des interrupteurs de puissance présentent l'inconvénient d'apporter un surplus de résistances (liées au câblage supplémentaire et aux interrupteurs eux-mêmes) au pack batterie, ce qui provoque davantage de pertes par effet Joule en cours d'utilisation. De plus, le coût du système complet est important, et celui-ci est très intrusif (les interrupteurs doivent être intégrées lors de l'assemblage du pack batterie). D'autre part, l'équilibrage du pack n'est alors possible qu'en cours de charge ou de décharge du pack, pas à l'arrêt sans recharge ;
(ii) Ceux basés sur l'utilisation de convertisseurs, qui permettent de transférer de la puissance d'une cellule élémentaire (ou d'un groupe de cellules élémentaires) vers une autre cellule élémentaire (ou un autre groupe de cellules élémentaires). Les convertisseurs sont alors la plupart du temps utilisés en source de tension. Vu le grand nombre de cellules élémentaires présentes dans les packs batteries de forte énergie, tels que ceux utilisés dans l'automobile, l'approche généralement adoptée consiste à utiliser plusieurs types de convertisseurs pour assurer les transferts d'énergie entre blocs de cellules élémentaires, et entre cellules élémentaires. Une grande variété de topologies différentes existe pour ce type de système d'équilibrage et permet un équilibrage à la fois en cours d'utilisation, et à l'arrêt.

Le document WO2012/1200300A1 divulgue un système d'équilibrage de charge pour batterie de puissance comportant au moins deux étages d'accumulateur(s) mis en série, un étage d'accumulateur(s) comprenant au moins un accumulateur. Ledit système comporte : une pluralité de convertisseurs isolés montés en parallèle, respectivement connectés d'une part à un nombre prédéfini d'étages d'accumulateur (s) associés, et d'autre part à un réseau basse tension d'alimentation d'auxiliaires électriques d'un véhicule automobile, et une unité de commande desdits convertisseurs configurée pour commander au moins un convertisseur de façon à amener le nombre prédéfini d'étages d'accumulateur(s) associés à un niveau de charge ou décharge similaire, et pour commander un transfert d'énergie de la batterie de puissance vers ledit réseau basse tension via lesdits convertisseurs de façon à alimenter lesdits auxiliaires.

Toutefois, les systèmes connus d'équilibrage non-dissipatif basés sur l'utilisation de convertisseurs sont complexes et coûteux. En outre, les systèmes basés sur l'utilisation de convertisseurs bidirectionnels ne permettent pas un transfert d'énergie efficace lors de l'équilibrage de la batterie. Les convertisseurs bidirectionnels de ces systèmes sont conçus pour fournir un transfert d'énergie adéquat dans chaque sens de transfert mais ne fournissent dans aucun sens de transfert un transfert d'énergie optimal.

Un but de la présente invention est de répondre aux inconvénients mentionnés ci-dessus et, en particulier, de proposer un système d'équilibrage d'une batterie de traction d'un véhicule permettant de réduire drastiquement le coût d'un tel système non-dissipatif, d'améliorer sa fiabilité et permettant un transfert d'énergie efficace lors de l'équilibrage de la batterie.

Pour cela un premier aspect de l'invention concerne un système d'équilibrage d'une batterie de traction d'un véhicule comprenant :
- la batterie incluant une pluralité de modules, chaque module comprenant une pluralité d'accumulateurs ;
- une pluralité de convertisseurs d'énergie, chaque convertisseur d'énergie étant associé à un module et destiné à être relié à un réseau de bord du véhicule, et chaque convertisseur d'énergie incluant un circuit magnétique et un ensemble d'enroulements configurés pour transférer de l'énergie d'un module au réseau de bord ;
caractérisé en ce que chaque convertisseur d'énergie comprend en outre un ensemble d'enroulements supplémentaire configuré pour transférer de l'énergie du réseau de bord à un accumulateur.

Un tel système intègre le principe d'équilibrage dans un système plus complet qui remplit aussi les fonctions de fourniture de la puissance sur le réseau de servitude 14V véhicule. Le système utilise moins de convertisseurs en regroupant les fonctionnalités de fourniture du 14V et d'équilibrage de la batterie si bien qu'il présente un coût minimal pour une efficacité maximale en termes de gain d'autonomie et de préservation des propriétés de la batterie. En outre, la réduction du nombre de convertisseurs utilisés dans un tel système permet d'améliorer la fiabilité du système et de réduire le coût du système. De surcroît, deux ensembles d'enroulements sont utilisé pour assurer la bidirectionnalité. Le transfert d'énergie de chaque ensemble d'enroulements peut être optimisé individuellement permettant ainsi d'optimiser le transfert d'énergie dans chaque sens de transfert d'énergie et d'améliorer significativement le rendement du système.

De manière avantageuse, l'ensemble d'enroulement et l'ensemble d'enroulements supplémentaire partagent le circuit magnétique.

Le nombre de composants du système est ainsi minimisé permettant d'améliorer la fiabilité du système et de réduire le coût d'un tel système non-dissipatif.

De manière très avantageuse, l'ensemble d'enroulements comprend un premier enroulement destiné à être raccordé au réseau de bord et un deuxième enroulement raccordé en série aux accumulateurs du module pour transférer de l'énergie de la batterie au réseau de bord ; et l'ensemble d'enroulements supplémentaire comprend un troisième enroulement destiné à être raccordé au réseau de bord et un quatrième enroulement, le quatrième enroulement étant raccordé en parallèle à un accumulateur du module pour transférer de l'énergie du réseau de bord à un accumulateur.

Une réalisation particulièrement intéressante consiste en ce que chaque convertisseur d'énergie comprend en outre des moyens d'activation et de désactivation de l'ensemble d'enroulements et de l'ensemble d'enroulements supplémentaire pour simultanément transférer de l'énergie d'un premier module au réseau de bord et de l'énergie du réseau de bord à un accumulateur d'un deuxième module.

De manière très avantageuse, chaque convertisseur comprend un commutateur raccordé en série aux accumulateurs et au deuxième enroulement, et un commutateur raccordé en série au premier enroulement.

Une réalisation particulièrement intéressante consiste en ce que chaque convertisseur comprend en outre un commutateur raccordé en série au troisième enroulement, et un commutateur raccordé en série entre l'accumulateur et l'enroulement.

Une réalisation particulièrement intéressante consiste en ce que le système inclut un réseau de bord.

De manière très avantageuse, le premier enroulement et le troisième enroulement de chaque convertisseur d'énergie sont reliés électriquement au premier enroulement et au troisième enroulement de chaque autre convertisseur d'énergie par l'intermédiaire du réseau de bord afin de fournir de l'énergie électrique d'un premier module de la batterie à un accumulateur d'un deuxième module de la batterie.

De manière très avantageuse, chaque convertisseur comprend en outre un enroulement de mesure de tension pour mesurer la tension d'un accumulateur.

Selon un deuxième aspect, la présente l'invention concerne un véhicule automobile comprenant un système d'équilibrage d'une batterie de traction d'un véhicule tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la Figure 1 montre un système d'équilibrage d'une batterie de traction d'un véhicule selon la présente invention ;
- la Figure 2 montre le système illustré dans la Figure 1 d'une manière plus détaillée ;
- la Figure 3 montre des détails d'un convertisseur d'énergie du système d'équilibrage d'une batterie d'un véhicule illustré dans la Figure 1 ; et
- la Figure 4 montre un enroulement de mesure de tension du système d'équilibrage de la présente invention pour mesurer la tension de chaque accumulateur de la batterie de traction.

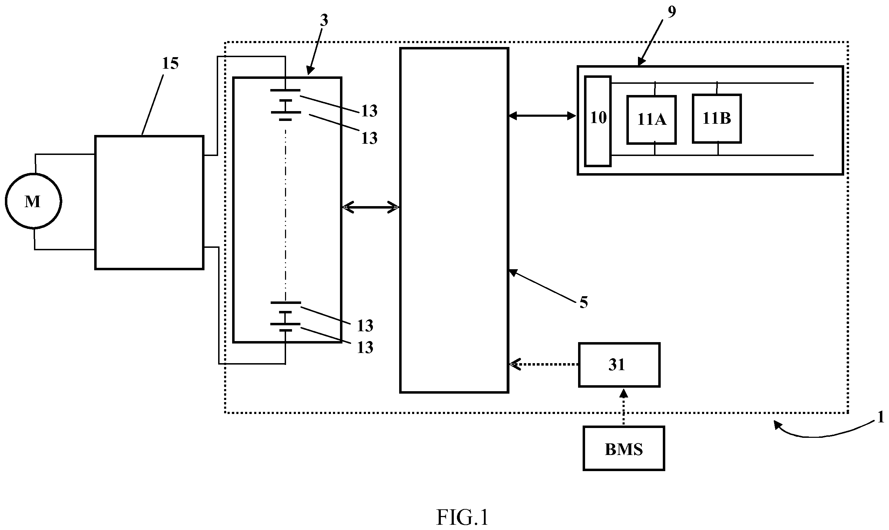

La Figure 1 représente un système 1 d'équilibrage d'une batterie de traction d'un véhicule selon la présente invention.

Le système 1 comprend une batterie de traction 3et un ensemble 5 de convertisseurs d'énergie. L'ensemble 5 de convertisseurs d'énergie est relié électriquement à un réseau de bord 9 d'un véhicule. Alternativement, le système 1 d'équilibrage d'une batterie de traction comprend le réseau de bord 9.

Le réseau de bord 9 illustré dans la Figure 1 comprend des moyens de stockage d'énergie 10. Toutefois, il n'est pas nécessaire que le réseau de bord 9 inclue des moyens de stockage d'énergie.

Les moyens de stockage d'énergie 10 sont, par exemple, une batterie (par exemple au plomb) typiquement de 10V à 16V (par exemple 12V) qui assure l'alimentation des auxiliaires 11A, 11B du véhicule (les dispositifs du véhicule consommateurs de l'énergie, tels que des calculateurs de gestion électronique, le chauffage des sièges, le ventilateur de confort). Dans une variante de la présente invention, les moyens de stockage d'énergie 10 est un condensateur ou un supercondensateur, ou un ensemble de condensateurs ou supercondensateurs.

Le réseau de bord 9, souvent nommé « réseau 14 V », inclut les moyens de stockage d'énergie 10 et les auxiliaires 11A, 11B du véhicule. Les auxiliaires 11A, 11B sont reliés électriquement aux moyens de stockage d'énergie 10. L'ensemble 5 de convertisseurs est raccordé aux moyens de stockage d'énergie 10 et au réseau de bord 9 et il fournit de l'énergie aux moyens de stockage d'énergie 10 et au réseau de bord 9. Lorsque le réseau de bord 9 n'inclut pas les moyens de stockage d'énergie 10, l'ensemble 5 de convertisseurs est raccordé au réseau de bord 9 et fournit de l'énergie au réseau de bord 9 et aux auxiliaires 11A, 11B du véhicule pour faire fonctionner ces auxiliaires 11A, 11B.

La batterie 3 est, par exemple, de type lithium-ion et inclut une pluralité d'accumulateurs électrochimiques 13 raccordés en série. Alternativement, un ou plusieurs accumulateurs 13 peut être disposé en parallèle de chaque accumulateur en série (les accumulateurs associés en parallèle formant un étage) afin d'augmenter le courant fourni par la batterie 3.

L'accumulateur électrochimique 13 est la cellule élémentaire de la batterie 3 et il a une tension nominale d'environ 3.3V pour le type lithium-ion à base de phosphate de fer et 4.2V pour le type lithium-ion à base d'oxyde de cobalt.

La batterie 3 est une batterie haute tension, typiquement de 70V à 400V, qui alimente un moteur électrique M par l'intermédiaire d'un onduleur 15 afin d'assurer la traction du véhicule. L'onduleur 15 est un convertisseur DC/AC pour l'alimentation et le pilotage du véhicule électrique.

Le système 1 fait partie d'un système de gestion de la batterie BMS du véhicule. Le système de gestion de la batterie BMS comprend un algorithme, des calculateurs et des capteurs pour faire fonctionner le système 1 d'équilibrage de la batterie 3.

L'ensemble 5 de convertisseurs est configuré pour transférer de l'énergie du réseau de bord 9 à la batterie 3, et est configuré pour transférer de l'énergie de la batterie 3 au réseau de bord 9. Dans le système 1 selon la présente invention illustré dans la Figure 1, l'ensemble 5 de convertisseurs d'énergie est configuré pour transférer de l'énergie du réseau de bord 9 et des moyens de stockage d'énergie 10 à la batterie 3, et est configuré pour transférer de l'énergie de la batterie 3 au réseau de bord 9 et aux moyens de stockage d'énergie 10 et.

L'ensemble 5 de convertisseurs est raccordé aux moyens de stockage d'énergie 10 et au réseau de bord 9 et en outre est relié à la batterie 3 d'une manière permettant un transfert d'énergie non-dissipatif avec la batterie 3.

L'ensemble 5 de convertisseurs fournit la tension nécessaire (typiquement de 10V à 16V) pour alimenter le réseau de bord 9 et les moyens de stockage d'énergie 10 et assure l'alimentation des auxiliaires 11A, 11B du réseau de bord 9. De plus, il recharge sélectivement un ou plusieurs accumulateurs 13 en utilisant l'énergie fournie au réseau de bord 9 par l'ensemble 5 de convertisseurs et/ou l'énergie stockée dans les moyens de stockage d'énergie 10 du réseau de bord 9.

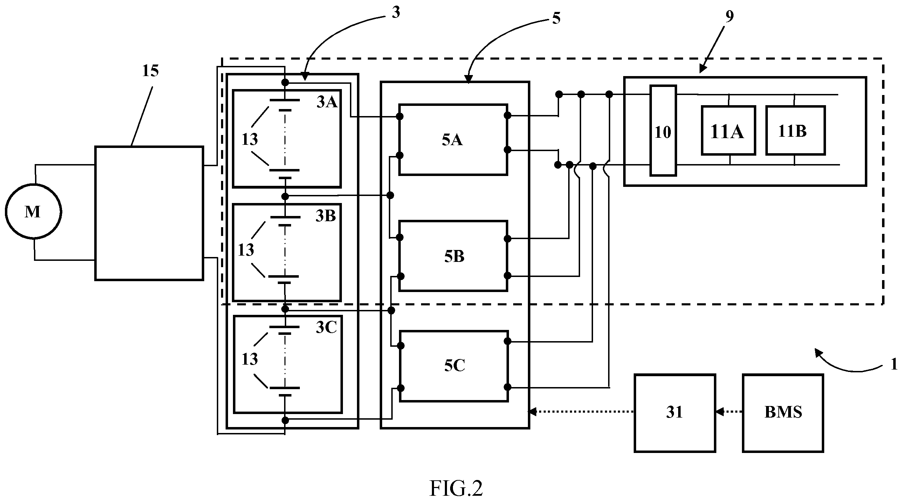

La Figure 2 montre le système illustré dans la Figure 1 d'une manière plus détaillée. La batterie 3 comprend une pluralité de modules 3A, 3B, 3C. La Figure 2 n'illustre que trois modules 3A, 3B, 3C pour faciliter la compréhension de la présente invention.

Chaque module comprend une pluralité d'accumulateurs 13. Chaque module contient un nombre d'accumulateurs en série permettant de fournir la tension nécessaire (typiquement de 10V à 16V) pour alimenter le réseau de bord 9 afin d'assurer l'alimentation des auxiliaires 11A, 11B. Chaque module fournit, par exemple, 14V.

L'ensemble 5 de convertisseurs comprend une pluralité de convertisseurs d'énergie 5A, 5B, 5C. Chaque convertisseur d'énergie 5A, 5B, 5C est associé et relié à un module 3A, 3B, 3C et chaque convertisseur d'énergie 5A, 5B, 5C est relié au réseau de bord (9).

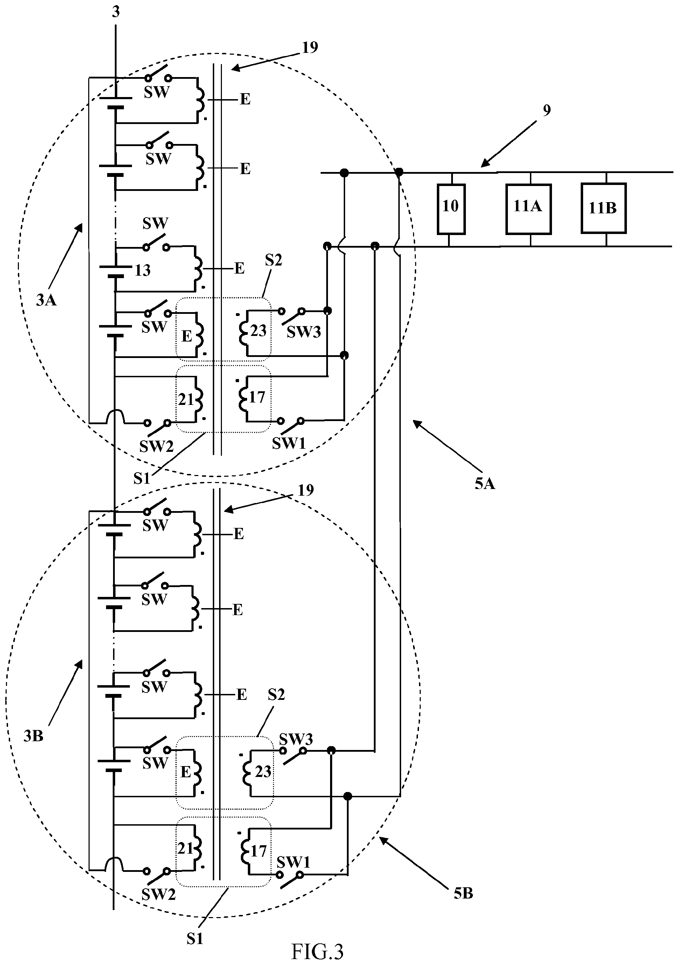

Comme illustré sur la Figure 3 (agrandissement de la partie encadrée par des tirets dans la Figure 2), pour chaque module 3A, 3B, 3C le convertisseur d'énergie 5A, 5B, 5C associé comprend un premier enroulement 17 raccordé au réseau de bord 9 et aux moyens de stockage d'énergie 10, un circuit magnétique 19 et un deuxième enroulement 21 raccordé en série aux accumulateurs 13 en série.

Chaque convertisseur 5A, 5B, 5C comporte un commutateur SW1 raccordé en série au premier enroulement 17. De plus, chaque convertisseur 5A, 5B, 5C comporte, pour chaque module, un commutateur SW2 raccordé en série aux accumulateurs 13 et au deuxième enroulement 21 afin de former un circuit en série.

Le premier enroulement 17 et le deuxième enroulement 21 forment un premier ensemble S1 d'enroulements. Le premier enroulement 17 et le deuxième enroulement 21 sont magnétiquement couplés par le circuit magnétique 19 et un isolement galvanique existe entre les deux enroulements.

Le premier ensemble S1 d'enroulements est configuré pour transférer de l'énergie d'un module 3A, 3B, 3C au réseau de bord 9.

Chaque convertisseur 5A, 5B, 5C comprend en outre, pour chaque module, un troisième enroulement 23 raccordé au réseau de bord 9 et aux moyens de stockage d'énergie 10, et un commutateur SW3 raccordé en série au troisième enroulement 23.

Chaque convertisseur 5A, 5B, 5C inclut, pour chaque module, un quatrième enroulement E raccordé en parallèle à chaque accumulateur 13 du module 3A, 3B, 3C, et un commutateur SW raccordé entre l'accumulateur 13 et l'enroulement E.

Le troisième enroulement 23 et le quatrième enroulement E (ou les quatrièmes enroulements E) forment un deuxième ensemble S2 d'enroulements (ou un ensemble d'enroulements supplémentaire). Le troisième enroulement 23 et les quatrièmes enroulements E sont magnétiquement couplés par le circuit magnétique 19 et un isolement galvanique existe entre les deux enroulements.

Le deuxième ensemble S2 d'enroulements est configuré pour transférer de l'énergie du réseau de bord 9 à un ou plusieurs accumulateurs 13.

Le premier ensemble S1 d'enroulements et le deuxième ensemble S2 d'enroulements partagent le même circuit magnétique 19 du convertisseur d'énergie 5A, 5B, 5C.

Le commutateur SW, le commutateur SW1, le commutateur SW2, et le commutateur SW3 forment des moyens d'activation et de désactivation du premier ensemble S1 d'enroulements et du deuxième ensemble S2 d'enroulements. Chaque convertisseur d'énergie 5A, 5B, 5C comprend ainsi des moyens d'activation et de désactivation du premier ensemble S1 d'enroulements et du deuxième ensemble S2 d'enroulements comprenant le commutateur SW, le commutateur SW1, le commutateur SW2, et le commutateur SW3.

Les moyens d'activation et de désactivation sont aptes à activer le fonctionnement du premier ensemble S1 d'enroulements et à désactiver le fonctionnement du deuxième ensemble S2 d'enroulements d'un premier convertisseur 5A, 5B, 5C, et aptes à désactiver le fonctionnement du premier ensemble S1 d'enroulements et à activer le fonctionnement du deuxième ensemble S2 d'enroulements d'un deuxième convertisseur 5A, 5B, 5C. Ceci permet de simultanément transférer de l'énergie d'un module associé au premier convertisseur au réseau de bord 9 et de l'énergie du réseau de bord 9 à au moins un accumulateur 13 d'un autre module associé au deuxième convertisseur.

Le système 1 inclut en outre des moyens de commande 31 (Figures 1 et 2) configurés pour générer et envoyer des signaux de commande aux commutateurs SW, au commutateur SW1 et au commutateur SW2 afin d'ouvrir et de fermer les commutateurs SW, le commutateur SW1, le commutateur SW2, et le commutateur SW3 des moyens d'activation et de désactivation. Ceci permet de faire fonctionner ou de ne pas faire fonctionner le premier ensemble S1 d'enroulements et le deuxième ensemble S2 d'enroulements de chaque convertisseur 5A, 5B, 5C.

Le système de gestion de la batterie BMS est configuré pour gérer la commutation de ces commutateurs de chaque convertisseur 5A, 5B, 5C par l'intermédiaire des moyens de commande 31 afin de gérer le transfert d'énergie entre le réseau de bord 9 et un accumulateur 13 d'un ou plusieurs modules 3A, 3B, 3C, et de gérer le transfert d'énergie entre un ou plusieurs modules 3A, 3B, 3C et le réseau de bord 9.

Comme illustré sur les Figures 2 et 3, le premier enroulement 17 et le troisième enroulement 23 de chaque convertisseur d'énergie 5A, 5B, 5C sont reliés électriquement au premier enroulement 17 et au troisième enroulement 23 de chaque autre convertisseur d'énergie 5A, 5B, 5C par l'intermédiaire du réseau de bord 9. Ceci permet de fournir de l'énergie électrique d'un premier module 3A, 3B, 3C à un accumulateur 13 d'un deuxième module 3A, 3B, 3C par l'intermédiaire du réseau électrique.

L'opération du système 1 selon le présent mode de réalisation sera maintenant décrite.

Lorsque chaque commutateur SW et le commutateur SW3 d'un convertisseur 5A, 5B, 5C sont mis en position ouverte (ainsi le deuxième ensemble S2 d'enroulements est désactivé et ne fonctionne pas), le commutateur SW2 du premier ensemble S1 d'enroulements est mis en position fermée et un courant venant des accumulateurs 13 en série du module circule dans le deuxième enroulement 21. L'énergie stockée dans les accumulateurs 13 du module est transférée du deuxième enroulement 21 au premier enroulement 17, par l'intermédiaire du circuit magnétique 19, lorsque le commutateur SW1 raccordé en série au premier enroulement 17 est mis en position fermée. L'énergie stockée dans les accumulateurs 13 du module est ainsi transférée au réseau de bord 9 et aux moyens de stockage d'énergie 10 par l'intermédiaire du premier enroulement 17.

Ceci permet à chaque module 3A, 3B, 3C de fournir la tension nécessaire pour alimenter le réseau de bord 9 ainsi que les moyens de stockage d'énergie 10 et les auxiliaires 11A, 11B.

Lorsque les commutateurs SW1 et SW2 sont mis en position ouverte (ainsi le premier ensemble S1 d'enroulements est désactivé et ne fonctionne pas), un commutateur SW raccordé en série à un accumulateur 13 du deuxième ensemble S2 d'enroulements est sélectivement mis en position fermée et lorsque le commutateur SW3 raccordé en série au troisième enroulement 23 est mis en position fermé, un courant venant du réseau de bord 9 (par exemple, les moyens de stockage d'énergie 10) circule dans le troisième enroulement 23. L'énergie stockée dans les moyens de stockage d'énergie 10 est transférée du troisième enroulement 23 au quatrième enroulement E par l'intermédiaire du circuit magnétique 19. L'énergie stockée dans les moyens de stockage d'énergie 10 est ainsi transférée à l'accumulateur sélectionné. Le convertisseur d'énergie 5A, 5B, 5C ainsi recharge sélectivement un accumulateur en utilisant l'énergie stockée dans les moyens de stockage d'énergie 10 du réseau de bord 9 afin d'équilibrer le niveau de charge des accumulateurs 13 de la batterie 3.

Lorsque le réseau de bord 9 n'inclut pas les moyens de stockage d'énergie 10, l'énergie fournie par un autre module 3A, 3B, 3C au réseau de bord 9 par l'intermédiaire d'un convertisseur d'énergie 5A, 5B, 5C est transférée au quatrième enroulement E par l'intermédiaire du troisième enroulement 23 et du circuit magnétique 19. L'énergie fournie au réseau de bord 9 par les convertisseurs d'énergie 5A, 5B, 5C est ainsi transférée à l'accumulateur sélectionné.

Le système de gestion de la batterie BMS gère le transfert d'énergie entre le réseau de bord 9 et les accumulateurs 13 et le transfert d'énergie entre les modules 3A, 3B 3C et le réseau de bord 9 par l'intermédiaire des moyens de commande 31. Les moyens de commande 31 fournissent les signaux de commande permettant d'ouvrir et de fermer les commutateurs SW, SW1, SW2, SW3, et permettant de faire fonctionner le premier ensemble S1 d'enroulements et de désactiver le deuxième ensemble S2 d'enroulements d'un (ou plusieurs) module, et de désactiver le premier ensemble S1 d'enroulements et de faire fonctionner le deuxième ensemble S2 d'enroulements d'un (ou plusieurs) autre module.

Le système 1 selon la présente invention permet à un premier module (par exemple, module 3A ou modules 3A et 3C) de fournir la tension nécessaire pour alimenter le réseau de bord 9 et/ou les moyens de stockage d'énergie 10, et de simultanément recharger sélectivement un accumulateur d'un deuxième module (par exemple, module 3B) en utilisant l'énergie fournie au réseau de bord 9 et/ou l'énergie stockée dans les moyens de stockage d'énergie 10 afin d'équilibrer le niveau de charge des accumulateurs de la batterie 3.

Il est en outre possible d'utiliser plusieurs modules pour fournir la tension nécessaire pour alimenter les moyens de stockage d'énergie 10 et les auxiliaires 11A, 11B du réseau de bord 9. Il est aussi possible de recharger plusieurs accumulateurs 13 de modules différents, par exemple, un accumulateur 13 du module 3B et un accumulateur 13 du module 3C.

Un circuit magnétique commun 19 est utilisé pour chaque module afin d'effectuer la charge des accumulateurs 13 ainsi que la fourniture du 14V aux moyens de stockage d'énergie 10 et les auxiliaires 11A, 11B du réseau de bord 9 car, en fonctionnement, les états « charge accumulateur » et « fourniture 14V » ne sont pas actifs en même temps. Un convertisseur DC/DC habituellement disposé entre la batterie et le réseau de bord pour l'alimentation des auxiliaires du réseau de bord 9 n'est ainsi plus nécessaire.

Le système selon la présente invention intègre le principe d'équilibrage dans un système plus complet qui remplit aussi les fonctions de fourniture de la puissance sur le réseau de servitude 14V véhicule.

Le système utilise moins de convertisseurs en regroupant les fonctionnalités de fourniture du 14V et d'équilibrage de la batterie si bien qu'il présente un coût minimal pour une efficacité maximale en termes de gain d'autonomie et de préservation des propriétés de la batterie.

En outre, la réduction du nombre de convertisseurs utilisés dans un tel système permet d'améliorer la fiabilité du système et de réduire le coût du système.

De surcroît, deux ensembles d'enroulements sont utilisés pour assurer la bidirectionnalité. Le transfert d'énergie de chaque ensemble d'enroulements peut être optimisé individuellement permettant ainsi d'optimiser le transfert d'énergie dans chaque sens de transfert d'énergie et d'améliorer significativement le rendement du système.

En outre, l'utilisation d'un circuit magnétique commun permet de minimiser le nombre de composants du système et d'améliorer sa fiabilité.

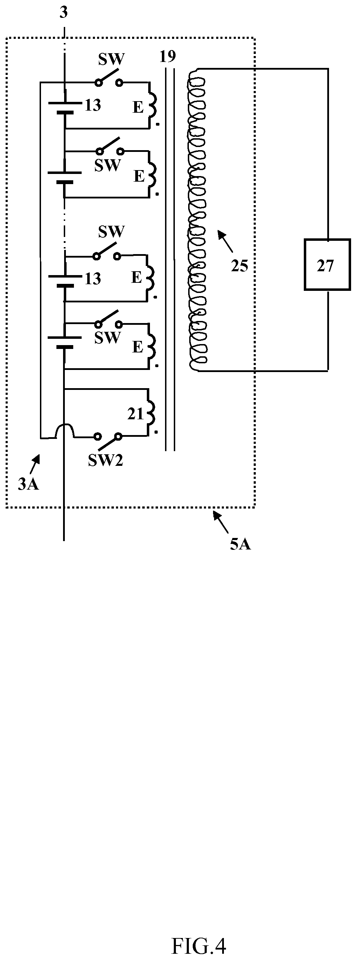

Selon un autre aspect de la présente invention, chaque convertisseur d'énergie 5A, 5B, 5C du système 1 peut comprendre en plus un enroulement de mesure de tension 25 (illustré sur la Figure 4) sur le circuit magnétique 19 pour mesurer la tension de chaque accumulateur 13 dans un module. Lorsqu'un enroulement E d'un accumulateur 13 est activé en fermant un commutateur SW, une tension proportionnelle à la tension de l'accumulateur 13 activé est générée dans l'enroulement de mesure de tension 25. Le signal généré est filtré et traité par un calculateur 27 du système 1 pour extraire une valeur représentative de la tension de l'accumulateur 13 activé. Cette valeur est fournie au système de gestion de la batterie BMS du véhicule.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

## Revendications

1. Système (1) d'équilibrage d'une batterie de traction (3) d'un véhicule comprenant :
- la batterie (3) incluant une pluralité de modules (3A, 3B, 3C), chaque module (3A, 3B, 3C) comprenant une pluralité d'accumulateurs (13) ;
- une pluralité de convertisseurs d'énergie (5A, 5B, 5C), chaque convertisseur d'énergie (5A, 5B, 5C) étant associé à un module (3A, 3B, 3C) et destiné à être relié à un réseau de bord (9) du véhicule, et chaque convertisseur d'énergie (5A, 5B, 5C) incluant un circuit magnétique (19) et un ensemble d'enroulements (S1) configurés pour transférer de l'énergie d'un module (3A, 3B, 3C) au réseau de bord (9);
chaque convertisseur d'énergie (5A, 5B, 5C) comprenant en outre un ensemble d'enroulements supplémentaire (S2) configuré pour transférer de l'énergie du réseau de bord (9) à un accumulateur (13),
**caractérisé en ce que** l'ensemble d'enroulement (S1) et l'ensemble d'enroulements supplémentaire (S2) partagent le circuit magnétique (19).

2. Système (1) selon la revendication précédente, **caractérisé en ce que** l'ensemble d'enroulements (S1) comprend un premier enroulement (17) destiné à être raccordé au réseau de bord (9) et un deuxième enroulement (21) raccordé en série aux accumulateurs (13) du module (3A, 3B, 3C) pour transférer de l'énergie de la batterie (3) au réseau de bord (9) ; et l'ensemble d'enroulements supplémentaire (S2) comprend un troisième enroulement (23) destiné à être raccordé au réseau de bord (9) et un quatrième enroulement (E), le quatrième enroulement (E) étant raccordé en parallèle à un accumulateur (13) du module (3A, 3B, 3C) pour transférer de l'énergie du réseau de bord (9) à un accumulateur (13).

3. Système (1) selon l'une quelconque des revendications précédentes, **caractérisé en ce que** chaque convertisseur d'énergie (5A, 5B, 5C) comprend en outre des moyens d'activation et de désactivation (SW, SW1, SW2, SW3) de l'ensemble d'enroulements (S1) et de l'ensemble d'enroulements supplémentaire (S2) pour simultanément transférer de l'énergie d'un premier module (3A, 3B, 3C) au réseau de bord (9) et de l'énergie du réseau de bord (9) à un accumulateur (13) d'un deuxième module (3A, 3B, 3C).

4. Système (1) selon l'une quelconque des revendications 2 à 3, **caractérisé en ce que** chaque convertisseur (5A, 5B, 5C) comprend un commutateur (SW2) raccordé en série aux accumulateurs (13) et au deuxième enroulement (21), et un commutateur (SW1) raccordé en série au premier enroulement (17).

5. Système (1) selon la revendication 2, **caractérisé en ce que** chaque convertisseur (5A, 5B, 5C) comprend en outre un commutateur (SW3) raccordé en série au troisième enroulement (23), et un commutateur (SW) raccordé en série entre l'accumulateur (13) et le quatrième enroulement (E).

6. Système (1) selon l'une quelconque des revendications précédentes, **caractérisé en ce qu'**il inclut un réseau de bord (9).

7. Système (1) selon la revendication précédente lorsque dépendante de la revendication 2 ou 5, **caractérisé en ce que** le premier enroulement (17) et le troisième enroulement (23) de chaque convertisseur d'énergie (5A, 5B, 5C) sont reliés électriquement au premier enroulement (17) et au troisième enroulement (23) de chaque autre convertisseur d'énergie (5A, 5B, 5C) par l'intermédiaire du réseau de bord (9) afin de fournir de l'énergie électrique d'un premier module (3A, 3B, 3C) de la batterie (3) à un accumulateur (13) d'un deuxième module (3A, 3B, 3C) de la batterie (3).

8. Système (1) selon l'une quelconque des revendications précédentes, **caractérisé en ce que** chaque convertisseur (5A, 5B, 5C) comprend en outre un enroulement de mesure de tension (25) pour mesurer la tension d'un accumulateur (13).

9. Véhicule automobile comprenant un système (1) d'équilibrage d'une batterie de traction selon l'une quelconque des revendications précédentes.

## Patentansprüche

1. System (1) zum Ausgleich einer Traktionsbatterie (3) eines Fahrzeugs, umfassend:
- die Batterie (3), einschließend eine Vielzahl von Modulen (3A, 3B, 3C), wobei jedes Modul (3A, 3B, 3C) eine Vielzahl von Akkumulatoren (13) umfasst;
- eine Vielzahl von Energiewandlern (5A, 5B, 5C), wobei jeder Energiewandler (5A, 5B, 5C) mit einem Modul assoziiert (3A, 3B, 3C) und ausgelegt ist, um mit einem bordeigenen Netz (9) des Fahrzeugs verbunden zu sein, und wobei jeder Energiewandler (5A, 5B, 5C) einen Magnetkreis (19) und eine Einheit von Wicklungen (S1) einschließt, die konfiguriert sind, um Energie von einem Modul (3A, 3B, 3C) an das bordeigene Netz (9) zu übertragen;
wobei jeder Energiewandler (5A, 5B, 5C) außerdem eine zusätzliche Einheit von Wicklungen (S2) umfasst, die konfiguriert ist, um Energie vom bordeigenen Netz (9) an einen Akkumulator (13) zu übertragen,
**dadurch gekennzeichnet, dass** die Einheit von Wicklungen (S1) und die zusätzliche Einheit von Wicklungen (S2) den Magnetkreis (19) teilen.

2. System (1) nach dem vorhergehenden Anspruch, **dadurch gekennzeichnet, dass** die Einheit von Wicklungen (S1) eine erste Wicklung (17) umfasst, die ausgelegt ist, um mit dem bordeigenen Netz (9) verbunden zu sein, und eine zweite Wicklung (21), die in Reihe mit den Akkumulatoren (13) des Moduls (3A, 3B, 3C) verbunden ist, um Energie von der Batterie (3) an das bordeigene Netz (9) zu übertragen; und die zusätzliche Einheit von Wicklungen (S2) eine dritte Wicklung (23) umfasst, die ausgelegt ist, um mit dem bordeigenen Netz (9) verbunden zu sein, und eine vierte Wicklung (E), wobei die vierte Wicklung (E) parallel mit einem Akkumulator (13) des Moduls (3A, 3B, 3C) verbunden ist, um Energie vom bordeigenen Netz (9) an einen Akkumulator (13) zu übertragen.

3. System (1) nach einem der vorhergehenden Ansprüche, **dadurch gekennzeichnet, dass** jeder Energiewandler (5A, 5B, 5C) außerdem Mittel zur Aktivierung und zur Deaktivierung (SW, SW1, SW2, SW3) der Einheit von Wicklungen (S1) und der zusätzlichen Einheit von Wicklungen (S2) umfasst, um gleichzeitig Energie von einem ersten Modul (3A, 3B, 3C) auf das bordeigene Netz (9) und Energie vom bordeigenen Netz (9) an einen Akkumulator (13) eines zweiten Moduls (3A, 3B, 3C) zu übertragen.

4. System (1) nach einem der Ansprüche 2 bis 3, **dadurch gekennzeichnet, dass** jeder Wandler (5A, 5B, 5C) einen Schalter (SW2) umfasst, der in Reihe mit den Akkumulatoren (13) und mit der zweiten Wicklung (21) verbunden ist, und einen Schalter (SW1), der in Reihe mit der ersten Wicklung (17) verbunden ist.

5. System (1) nach Anspruch 2, **dadurch gekennzeichnet, dass** jeder Wandler (5A, 5B, 5C) außerdem einen Schalter (SW3) umfasst, der in Reihe mit der dritten Wicklung (23) verbunden ist, und einen Schalter (SW), der in Reihe zwischen dem Akkumulator (13) und der vierten Wicklung (E) verbunden ist.

6. System (1) nach einem der vorhergehenden Ansprüche, **dadurch gekennzeichnet, dass** es ein bordeigenes Netz (9) einschließt.

7. System (1) nach dem vorhergehenden Anspruch, wenn er von Anspruch 2 oder 5 abhängig ist, **dadurch gekennzeichnet, dass** die erste Wicklung (17) und die dritte Wicklung (23) jedes Energiewandlers (5A, 5B, 5C) elektrisch mit der ersten Wicklung (17) und mit der dritten Wicklung (23) jedes anderen Energiewandlers (5A, 5B, 5C) mit Hilfe des bordeigenen Netzes (9) verbunden sind, um elektrische Energie von einem ersten Modul (3A, 3B, 3C) der Batterie (3) an einen Akkumulator (13) eines zweiten Moduls (3A, 3B, 3C) der Batterie (3) zu liefern.

8. System (1) nach einem der vorhergehenden Ansprüche, **dadurch gekennzeichnet, dass** jeder Wandler (5A, 5B, 5C) außerdem eine Wicklung zur Messung der Spannung (25) umfasst, um die Spannung eines Akkumulators (13) zu messen.

9. Kraftfahrzeug, umfassend ein System (1) zum Ausgleich einer Traktionsbatterie nach einem der vorhergehenden Ansprüche.

## Claims

1. Balancing system (1) of a traction battery (3) of a vehicle comprising:
- the battery (3) including a plurality of modules (3A, 3B, 3C), each module (3A, 3B, 3C) comprising a plurality of accumulators (13),
- a plurality of energy converters (5A, 5B, 5C), each energy converter (5A, 5B, 5C) being associated with a module (3A, 3B, 3C) and to be connected to an onboard network (9) of the vehicle, and each energy converter (5A, 5B, 5C) including a magnetic circuit (19) and a set of windings (S1) configured to transfer energy from a module (3A, 3B, 3C) to the onboard network (9);
each energy converter (5A, 5B, 5C) further comprising a set of additional windings (S2) configured to transfer energy from the onboard network (9) to an accumulator (13),
**characterised in that** the set of windings (S1) and the set of additional windings (S2) share the magnetic circuit (19).

2. System (1) according to the preceding claim, **characterised in that** the set of windings (S1) comprises a first winding (17) to be connected to the onboard network (9) and a second winding (21) connected in series to the accumulators (13) of the module (3A, 3B, 3C) to transfer energy from the battery (3) to the onboard network (9); and the set of additional windings (S2) comprises a third winding (23) to be connected to the onboard network (9) and a fourth winding (E), the fourth winding (E) being connected in parallel to an accumulator (13) of the module (3A, 3B, 3C) to transfer energy from the onboard network (9) to an accumulator (13).

3. System (1) according to any of the preceding claims, **characterised in that** each energy converter (5A, 5B, 5C) further comprises activation and deactivation means (SW, SW1, SW2, SW3) of the set of windings (S1) and the set of additional windings (S2) to simultaneously transfer energy from a first module (3A, 3B, 3C) to the onboard network (9) and energy from the onboard network (9) to an accumulator (13) of a second module (3A, 3B, 3C) .

4. System (1) according to any of claims 2 to 3, **characterised in that** each converter (5A, 5B, 5C) comprises a switch (SW2) connected in series to the accumulators (13) and to the second winding (21) and a switch (SW1) connected in series with the first winding (17) .

5. System (1) according to claim 2, **characterised in that** each converter (5A, 5B, 5C) further comprises a switch (SW3) connected in series to the third winding (23), and a switch (SW) connected in series between the accumulator (13) and the fourth winding (E).

6. System (1) according to any one of the preceding claims, **characterised in that** it includes an onboard network (9).

7. System (1) according to the preceding claim when dependent on claim 2 or 5, **characterised in that** the first winding (17) and the third winding (23) of each energy converter (5A, 5B, 5C) are electrically connected to the first winding (17) and to the third winding (23) of each other energy converter (5A, 5B, 5C) through the onboard network (9) in order to supply electrical energy from a first module (3A, 3B, 3C) of the battery (3) to an accumulator (13) of a second module (3A, 3B, 3C) of the battery (3).

8. System (1) according to any one of the preceding claims, **characterised in that** each converter (5A, 5B, 5C) further comprises a voltage measurement winding (25) to measure the voltage of an accumulator (13).

9. Motor vehicle comprising a traction battery balancing system (1) according to any one of the preceding claims.
